# EUROPEAN PATENT APPLICATION

(11) **EP 4 603 173 A1**
(43) Date of publication of application: **20.08.2025**
(21) Application number: 25157610.4
(22) Date of filing: 13.02.2025
(51) Int. Cl.: B01D 69/10, B01D 67/00, B01D 71/70

(54) **GAS SEPARATION MEMBRANE AND METHOD FOR MANUFACTURING GAS SEPARATION MEMBRANE**

(30) Priority: 15.02.2024 JP 2024021255
(71) Applicant: Seiko Epson Corporation, Tokyo 160-8801 (JP)
(72) Inventor: MATSUMOTO, Yasutaka, Suwa-shi, 392-8502 (JP)
(74) Representative: Lewis Silkin LLP

(57) **Abstract**

A gas separation membrane for selectively permeating and separating carbon dioxide from a mixed gas containing the carbon dioxide includes: a sheet-shaped porous body having a first main surface and a second main surface which are in a front-and-rear relationship with each other, and pores connecting the first main surface and the second main surface; and a separation layer provided on the first main surface and formed of a polymer material. A portion of the separation layer penetrates the pores from the first main surface. A ratio B/A is 30% or more, where A is an average thickness of the separation layer, and B is a penetration depth of the separation layer into the porous body.

## Description

The present application is based on, and claims priority from JP Application Serial Number 2024-021255, filed February 15, 2024, the disclosure of which is hereby incorporated by reference herein in its entirety.

### BACKGROUND

### 1. Technical Field

The present disclosure relates to a gas separation membrane and a method for manufacturing the gas separation membrane.

### 2. Related Art

In order to implement carbon neutrality, a technique of capturing and directly collecting carbon dioxide from the atmosphere has been studied. As the technique, there has been known a chemical adsorption method in which carbon dioxide is absorbed in an absorbing liquid or an adsorbent, and a membrane separation method in which carbon dioxide is separated using a gas separation membrane.

JP-A-10-113545 discloses a gas separator having gas separation capability of allowing only a specific gas component to permeate from a multi-component mixed gas. The gas separator includes a porous substrate and a metal having gas separation capability. The metal having gas separation capability fills and closes the inside of small pores that are open on the surface of the porous substrate. Thus, only the specific gas component can be separated from the multi-component mixed gas passing through the small pores.

JP-A-10-113545 discloses that a metal coating film is formed in the small pores of the porous substrate by a plating method.

JP-A-10-113545 is an example of the related art.

However, a separation layer using a metal does not have a sufficient gas permeability to carbon dioxide. On the other hand, when a non-metallic material such as an organic material is used for the separation layer, there is a concern that adhesion between the separation layer and the porous substrate may not be sufficiently increased.

Therefore, an object of the present disclosure is to implement a gas separation membrane having an excellent carbon dioxide gas permeability and good adhesion of a separation layer.

### SUMMARY

A gas separation membrane according to an application example of the present disclosure is a gas separation membrane for selectively permeating and separating carbon dioxide from a mixed gas containing the carbon dioxide. The gas separation membrane includes: a sheet-shaped porous body having a first main surface and a second main surface which are in a front-and-rear relationship with each other, and pores connecting the first main surface and the second main surface; and a separation layer provided on the first main surface and formed of a polymer material. A portion of the separation layer penetrates the pores from the first main surface. A ratio B/A is 30% or more, where A is an average thickness of the separation layer, and B is a penetration depth of the separation layer into the porous body.

A method for manufacturing a gas separation membrane according to an application example of the present disclosure is a method for manufacturing the gas separation membrane according to the application example of the present disclosure. The method includes: supplying a liquid raw material to the first main surface of the porous body to form a coating film; performing a treatment of applying energy to the coating film from a side opposite to the porous body to cure or solidify the coating film to form the separation layer; and removing a portion of the coating film that is not cured or solidified.

### BRIEF DESCRIPTION OF THE DRAWINGS

FIG. 1 is a cross-sectional view schematically showing a gas separation membrane according to an embodiment.
FIG. 2 is a process diagram showing a configuration of a method for manufacturing the gas separation membrane according to the embodiment.
FIG. 3 is a cross-sectional view illustrating the method for manufacturing the gas separation membrane shown in FIG. 2.
FIG. 4 is a cross-sectional view illustrating the method for manufacturing the gas separation membrane shown in FIG. 2.
FIG. 5 is a cross-sectional view illustrating the method for manufacturing the gas separation membrane shown in FIG. 2.
FIG. 6 is a cross-sectional view illustrating the method for manufacturing the gas separation membrane shown in FIG. 2.
FIG. 7 is a cross-sectional view illustrating the method for manufacturing the gas separation membrane shown in FIG. 2.

### DESCRIPTION OF EMBODIMENTS

Hereinafter, a gas separation membrane and a method for manufacturing the gas separation membrane according to the present disclosure will be described in detail based on an embodiment shown in the accompanying drawings.

### 1. Configuration of Gas Separation Membrane

First, a configuration of a gas separation membrane according to the embodiment will be described.

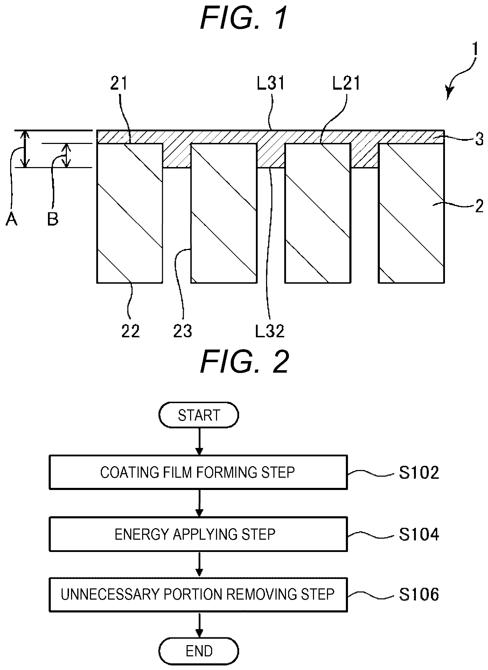

FIG. 1 is a cross-sectional view schematically showing a gas separation membrane 1 according to the embodiment. In the following description, an upper side of the gas separation membrane 1 shown in FIG. 1 is referred to as "upstream" or simply referred to as "upper", and a lower side thereof is referred to as "downstream" or simply referred to as "lower".

The gas separation membrane 1 shown in FIG. 1 has a function of selectively permeating carbon dioxide from a mixed gas containing the carbon dioxide and a non-target component. The gas separation membrane 1 shown in FIG. 1 is a composite membrane including a porous body 2 and a separation layer 3. The non-target component refers to a gas component other than the carbon dioxide that is contained in the mixed gas. Examples of the non-target component include nitrogen and methane, and nitrogen is particularly envisaged. Therefore, examples of the above-described mixed gas include a mixed gas of carbon dioxide and nitrogen.

The porous body 2 shown in FIG. 1 is a porous membrane having a first main surface 21 and a second main surface 22 which are in a front-and-rear relationship with each other, and pores 23. Such the porous body 2 has a good gas permeability, has good mechanical characteristics, and supports the separation layer 3. Accordingly, the mechanical characteristics of the gas separation membrane 1 as a whole can be improved without impairing a good gas selectivity ratio of the separation layer 3.

The separation layer 3 is formed of a polymer material that is denser (has a lower porosity) than the porous body 2. Such the separation layer 3 closes upper ends of the pores 23. The separation layer 3 selectively permeates carbon dioxide in a mixed gas supplied to upstream of the gas separation membrane 1 to downstream thereof, thereby implementing a good gas selectivity ratio. Accordingly, the gas separation membrane 1 can separate the carbon dioxide in the mixed gas.

The gas separation membrane 1 according to the present embodiment has a function of selectively permeating carbon dioxide, and characteristics thereof are quantitatively represented by a gas selectivity ratio. Specifically, when the non-target component is nitrogen, a nitrogen gas permeability of the gas separation membrane 1 is designated as R_{N2}, and a carbon dioxide gas permeability of the gas separation membrane 1 is designated as R_{CO2}. At this time, a gas selectivity ratio R_{CO2}/R_{N2} of the gas separation membrane 1 is preferably 10 or more, and more preferably 20 or more and 50 or less. When the gas selectivity ratio R_{CO2}/R_{N2} is within the above range, the gas separation membrane 1 can efficiently separate and collect the carbon dioxide in the mixed gas.

When the gas selectivity ratio falls below the lower limit value, many non-target components such as nitrogen are mixed in the collected carbon dioxide. Therefore, when storing or using the collected carbon dioxide, economic efficiency and handleability thereof may deteriorate. On the other hand, the gas selectivity ratio may exceed the upper limit value, and in this case, it may be difficult to sufficiently increase the carbon dioxide gas permeability of the gas separation membrane 1, and a manufacturing difficulty level or manufacturing cost of the gas separation membrane 1 that implements such a gas selectivity ratio may increase.

The nitrogen gas permeability R_{N2} of the gas separation membrane 1 and the carbon dioxide gas permeability R_{CO2} of the gas separation membrane 1 can be each measured according to a gas permeability test method (Part 1: Differential pressure method) defined in JIS K 7126-1: 2006. A gas permeability measuring device is used for the measurement. Examples of the gas permeability measuring device include GTR-11A/31A manufactured by GTR TEC Corporation. In the device, gas that permeates through the gas separation membrane 1 is introduced into a gas chromatograph, and the gas permeability of each component is measured. Accordingly, the nitrogen gas permeability and the carbon dioxide gas permeability can be measured.

In the gas separation membrane 1 according to the present embodiment, the carbon dioxide gas permeability R_{CO2} is preferably 15 GPU or more, more preferably 100 GPU or more and 20000 GPU or less, and still more preferably 200 GPU or more and 15000 GPU or less. Accordingly, the gas separation membrane 1 that can reduce an input amount of energy required for separation, specifically, that can reduce a pressure difference between pressures upstream and downstream of the gas separation membrane 1 can be implemented. When the carbon dioxide gas permeability R_{CO2} falls below the lower limit value, a large amount of energy is required for carbon dioxide separation, and economic efficiency may be lowered. On the other hand, when the carbon dioxide gas permeability R_{CO2} exceeds the upper limit value, it may be difficult to maintain the rest with the above-described gas selectivity ratio. 1 GPU is 3.35×10⁻¹⁰ mol•m⁻²•s⁻¹•Pa⁻¹.

The separation layer 3 is preferably in close contact with the porous body 2. In the present description, the term "close contact" means that an adhesion interface between the separation layer 3 and the porous body 2 has airtightness. Due to the airtightness, the separation layer 3 isolates the pores 23 of the porous body 2 from one another. That is, since there is no gap between the separation layer 3 and the porous body 2, communication between the pores 23 via the gap can be prevented.

### 1.1. Porous Body

The porous body 2 is a porous sheet having the pores 23, and has a good gas permeability. The porous body 2 has a rigidity higher than that of the separation layer 3, and is responsible for ensuring mechanical characteristics such as self-standing and durability of the gas separation membrane 1 as a whole. When the separation layer 3 has sufficient mechanical characteristics, the porous body 2 may be omitted.

Examples of a material of the porous body 2 include a polymer material, a ceramic material, and a metal material. The material of the porous body 2 may be a composite material of these materials and other materials.

Examples of the polymer material include polyolefin resins such as polyethylene and polypropylene, fluorine-containing resins such as polytetrafluoroethylene, polyvinyl fluoride, and polyvinylidene fluoride, polystyrene, cellulose, cellulose acetate, polyurethane, polyacrylonitrile, polyphenylene oxide, polysulfone, polyethersulfone, polyimide, polyaramid, and nylon.

Examples of the ceramic material include alumina, cordierite, mullite, silicon carbide, and zirconia. Examples of the metal material include stainless steel.

Among them, a filter having an open cell structure is preferably used for the porous body 2. The filter having an open cell structure is also referred to as an absolute-type filter, and has the pores 23 that are continuous from the first main surface 21 to the second main surface 22 and are independent of each other. Therefore, when forming the separation layer 3, the pores 23 can be easily filled with a liquid raw material, and as a result, the separation layer 3 can be reliably formed in each pore 23. Accordingly, the gas separation membrane 1 having an excellent gas permeability can be implemented without impairing the high gas selectivity ratio of the separation layer 3.

A filter formed of an aggregate of fibers is also called a nominal-type filter. In the filter, the pores 23 may become discontinuous or the pores 23 may unintentionally communicate with each other. Therefore, when forming the separation layer 3, it becomes difficult to fill the pores 23 with the liquid raw material, and as a result, defects may occur in the separation layer 3.

A shape of the porous body 2 may be a spiral shape, a tubular shape, a hollow fiber shape, or the like, in addition to a flat plate shape shown in FIG. 1.

An average thickness of the porous body 2 is not particularly limited, and is preferably 1 µm or more and 3000 µm or less, more preferably 5 µm or more and 500 µm or less, and still more preferably 10 µm or more and 150 µm or less. Accordingly, the porous body 2 has a necessary and sufficient rigidity to support the separation layer 3. When the average thickness of the porous body 2 falls below the lower limit value, the rigidity may be insufficient. On the other hand, when the average thickness of the porous body 2 exceeds the upper limit value, the rigidity of the porous body 2 may become too high, and handleability of the gas separation membrane 1 may decrease or adhesion of the separation layer 3 may decrease.

The average thickness of the porous body 2 is an average value of thicknesses measured at 10 positions of the porous body 2 in a stacking direction. The thickness of the porous body 2 can be measured using, for example, a thickness gauge.

The porous body 2 has the pores 23, and an average inner diameter thereof is referred to as an "average pore diameter". The average pore diameter of the porous body 2 is preferably 0.01 µm or more and 1000 µm or less, more preferably 0.1 µm or more and 500 µm or less, still more preferably 0.5 µm or more and 300 µm or less, and particularly preferably 1 µm or more and 100 µm or less. Accordingly, the separation layer 3 can be prevented from slipping out downstream of the porous body 2 while sufficiently ensuring the carbon dioxide gas permeability of the porous body 2. When the average pore diameter of the porous body 2 falls below the lower limit value, the carbon dioxide gas permeability of the porous body 2 may decrease. On the other hand, when the average pore diameter of the porous body 2 exceeds the upper limit value, the separation layer 3 may slip out downstream of the porous body 2.

The average pore diameter of the porous body 2 can be measured by a through hole diameter evaluation device after the separation layer 3 is removed from the gas separation membrane 1 and the single porous body 2 is taken out. Examples of the through hole diameter evaluation device include a perm porometer manufactured by PMI.

A porosity of the porous body 2 is preferably 20% or more and 90% or less, and more preferably 30% or more and 80% or less. Accordingly, the porous body 2 can achieve both good gas permeability and sufficient rigidity.

The porosity of the porous body 2 can be measured by the above-described through hole diameter evaluation device after the separation layer 3 is removed from the gas separation membrane 1.

### 1.2. Separation Layer

The separation layer 3 is provided on the first main surface 21 of the porous body 2, and is formed of a polymer material. The separation layer 3 is substantially a dense membrane and has a good affinity for carbon dioxide molecules. Due to the affinity, the separation layer 3 selectively permeates carbon dioxide.

An average thickness of the separation layer 3 is not particularly limited, and is preferably 10 nm or more and 1000 nm or less, more preferably 10 nm or more and 800 nm or less, still more preferably 30 nm or more and 500 nm or less, and particularly preferably 50 nm or more and 200 nm or less. Accordingly, the separation layer 3 has a sufficient gas permeability. As a result, the gas separation membrane 1 that can reduce an input amount of energy required for separating carbon dioxide, specifically, that can reduce a pressure difference between pressures upstream and downstream of the gas separation membrane 1 can be implemented. When the average thickness of the separation layer 3 falls below the lower limit value, a probability of occurrence of defects in the separation layer 3 may increase, or the separation layer 3 may be easily broken afterwards. On the other hand, when the average thickness of the separation layer 3 exceeds the upper limit value, the carbon dioxide gas permeability of the separation layer 3 may decrease, the input amount of energy required for separation may increase, and flexibility of the separation layer 3 may decrease.

The average thickness of the separation layer 3 is preferably 0.0050% or more and 1.0% or less, more preferably 0.010% or more and 0.50% or less, and still more preferably 0.030% or more and 0.30% or less, of the average thickness of the porous body 2. Accordingly, since a ratio of the thickness of the two layers can be optimized, the mechanical characteristics, the gas selectivity ratio, and the gas permeability of the gas separation membrane 1 can be satisfactorily balanced.

The average thickness of the separation layer 3 can be obtained, for example, by observing a cross section of the gas separation membrane 1 under magnification and averaging thicknesses at 10 locations. For the magnification observation, for example, a scanning electron microscope or a transmission electron microscope can be used.

As described above, the separation layer 3 which is made of a polymer material and has a small thickness has a good gas permeability, but tends to have low adhesion to the porous body 2. When the adhesion of the separation layer 3 is low, the separation layer 3 may be peeled off from the porous body 2.

On the other hand, in the gas separation membrane 1 according to the present embodiment, a portion of the separation layer 3 penetrates the pores 23 from the first main surface 21. In the gas separation membrane 1, a ratio B/A is 30% or more, where A is the average thickness of the separation layer 3 and B is a penetration depth of the separation layer 3 into the porous body 2.

According to such a configuration, even when a membrane made of a polymer material is used as the separation layer 3 and the average thickness A thereof is reduced, the adhesion of the separation layer 3 can be ensured. Accordingly, the gas separation membrane 1 having an excellent carbon dioxide gas permeability and excellent adhesion of the separation layer 3 can be implemented.

The ratio B/A is preferably 30% or more and 90% or less, more preferably 40% or more and 80% or less, and still more preferably 50% or more and 70% or less.

The average thickness A of the separation layer 3 and the penetration depth B of the separation layer 3 into the porous body 2 can be measured as follows.

First, the gas separation membrane 1 is cut in a thickness direction, and a cross section thereof is observed under magnification. At this time, the magnification is set such that an entire thickness of the separation layer 3 is captured in one image. Next, an extended image is taken, and in the obtained image, contour lines of an upper surface and a lower surface of the separation layer 3 are identified, respectively. Two parallel straight lines L31 and L32 are drawn to approximate the two contour lines, and a distance between the straight line L31 and the straight line L32 is defined as the average thickness A. FIG. 1 shows an example of the straight lines L31 and L32.

In the image, a contour line of an upper surface of the porous body 2 is identified. Then, a straight line L21 is drawn to approximate the contour line. The straight line L21 is also parallel to the two parallel straight lines L31 and L32. A distance between the straight line L21 and the straight line L32 is set as the penetration depth B. FIG. 1 shows an example of the straight line L21.

For the magnification observation, for example, a scanning electron microscope or a transmission electron microscope can be used.

When the ratio B/A falls below the lower limit value, the penetration depth B is insufficient, which reduces the adhesion of the separation layer 3. In this case, peeling of the separation layer 3 occurs, and the durability of the gas separation membrane 1 decreases. On the other hand, the ratio B/A may exceed the upper limit value, and the penetration depth B may be excessive. Therefore, there is a risk that a thickness of a portion of the separation layer 3 that covers the first main surface 21 of the porous body 2 may be too small. In this case, the adhesion of the separation layer 3 may decrease.

A material of the separation layer 3 is a polymer material. Examples of the polymer material include polyolefin resins such as polyethylene and polypropylene, fluorine-containing resins such as polytetrafluoroethylene, polyvinyl fluoride, and polyvinylidene fluoride, polystyrene, cellulose, cellulose acetate, polyurethane, polyacrylonitrile, polyphenylene oxide, polysulfone, polyethersulfone, polyimide, polyaramid, organopolysiloxane, polyethylene terephthalate (PET), polyacetal (POM), and polylactic acid (PLA). The material of the separation layer 3 may be one of the polymer materials or a composite material of two or more of the polymer materials. The polymer material may be a thermoplastic resin, a thermosetting resin, or a photocurable resin.

Among them, an organopolysiloxane is preferably used as the material of the separation layer 3. One molecule of the organopolysiloxane includes at least a unit (a T unit) represented by R¹SiO_{3/2}, a unit (a D unit) represented by R²R³SiO_{2/2}, and a unit (an M unit) represented by R⁴R⁵R⁶SiO_{1/2} as a basic constituent unit. In each unit, R¹ to R⁶ are an aliphatic hydrocarbon or a hydrogen atom. The organopolysiloxane is formed by combining the T unit, the D unit, and the M unit.

Specific examples of the organopolysiloxane include polydimethylsiloxane, polymethylphenylsiloxane, polydiphenylsiloxane, a polysulfone/polyhydroxystyrene/polydimethylsiloxane copolymer, a dimethylsiloxane/methylvinylsiloxane copolymer, a dimethylsiloxane/diphenylsiloxane/methylvinylsiloxane copolymer, a methyl-3,3,3-trifluoropropylsiloxane/methylvinylsiloxane copolymer, a dimethylsiloxane/methylphenylsiloxane/methylvinylsiloxane copolymer, vinyl terminated diphenylsiloxane/dimethylsiloxane copolymer, vinyl terminated polydimethylsiloxane, amino terminated polydimethylsiloxane, phenyl terminated polydimethylsiloxane, H terminated polydimethylsiloxane, and a dimethylsiloxane-methylhydrosiloxane copolymer. The expression "vinyl terminated" or the like indicates that at least one end of a main chain contained in the organopolysiloxane is substituted with a substituent such as a vinyl group. This includes a form in which a crosslinking reactant is formed. The material of the separation layer 3 may be one kind or a composite of two or more kinds thereof, or may be a composite material containing an organopolysiloxane as a main component in mass ratio and other resin components in combination.

The organopolysiloxane has a good affinity for carbon dioxide. Therefore, the separation layer 3 containing an organopolysiloxane exhibits a high gas selectivity ratio to carbon dioxide.

If necessary, any functional group may be introduced into an upstream surface of the separation layer 3 using a coupling agent or the like. By appropriately selecting the functional group, the affinity for carbon dioxide can be further increased.

### 2. Method for Manufacturing Gas Separation Membrane

Next, a method for manufacturing a gas separation membrane according to the embodiment will be described. In the following description, a method for manufacturing the gas separation membrane 1 shown in FIG. 1 will be described as an example.

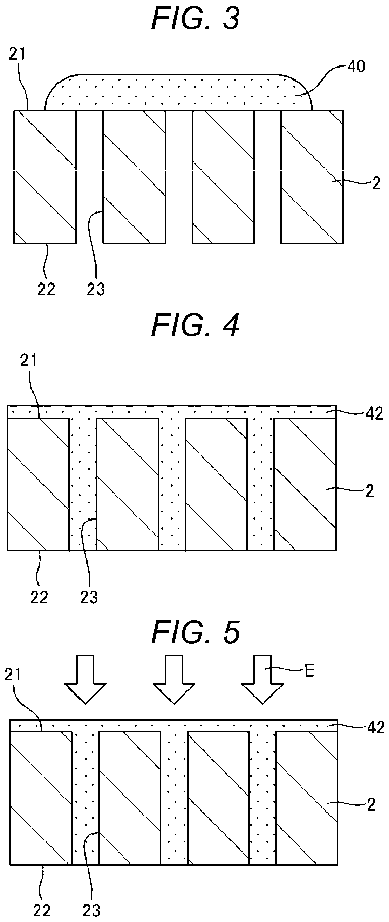

FIG. 2 is a process diagram showing a configuration of the method for manufacturing a gas separation membrane according to the embodiment. FIGS. 3 to 7 are cross-sectional views illustrating the method for manufacturing a gas separation membrane shown in FIG. 2.

The method for manufacturing a gas separation membrane shown in FIG. 2 includes a coating film forming step S102, an energy applying step S104, and an unnecessary portion removing step S106.

### 2.1. Coating Film Forming Step

In the coating film forming step S102, as shown in FIG. 3, a raw material liquid 40 (a liquid raw material) is supplied to the first main surface 21 of the porous body 2. The raw material liquid 40 covers the first main surface 21 and also permeates into the pores 23. In order to promote the penetration of the raw material liquid 40, an upper side of the porous body 2 may be pressurized, a lower side of the porous body 2 may be depressurized, or the porous body 2 may be heated.

The raw material liquid 40 can be appropriately selected depending on the material of the separation layer 3 to be manufactured.

For example, when the separation layer 3 contains a thermosetting resin, the raw material liquid 40 contains an uncured or semi-cured thermosetting resin, a curing agent, a polymerization initiator, and the like.

When the separation layer 3 contains a photocurable resin, the raw material liquid 40 contains an uncured or semi-cured photocurable resin, a curing agent, a photopolymerization initiator, and the like.

In addition, the raw material liquid 40 may contain any monomer component that can be polymerized by plasma, an electron beam, or the like.

Examples of a method for supplying the raw material liquid 40 include a dipping method, a dripping method, an inkjet method, a dispenser method, a spraying method, a screen printing method, a coater coating method, and a spin coating method.

Before the raw material liquid 40 is supplied, the porous body 2 may be subjected to a pretreatment. Examples of the pretreatment include a plasma treatment, an ultraviolet ray irradiation treatment, and an ozone treatment.

After the raw material liquid 40 is supplied, the supplied raw material liquid 40 may be allowed to stand, if necessary. A time for which the raw material liquid 40 is allowed to stand is not particularly limited, and is preferably 24 hours or less, and more preferably 1 hour or more and 20 hours or less.

The supplied raw material liquid 40 penetrates the pores 23 due to capillary action.

When a degree to which the raw material liquid 40 penetrates due to capillary action is expressed as a wicking height, the wicking height increases as a surface tension of the raw material liquid 40 increases, and decreases as a density of the raw material liquid 40 or an inner radius of the pores 23 increases. For example, when the raw material liquid 40 is silicone oil and the inner radius of the pores 23 is 1 mm, a wicking height of about 4.5 mm can be secured. Therefore, when the porous body 2 having a thickness equal to or less than the wicking height is used, the raw material liquid 40 can be efficiently permeated into the pores 23 and can be maintained in that state. Accordingly, the first main surface 21 of the porous body 2 and the inside of the pores 23 can be covered with the raw material liquid 40, and ultimately, the separation layer 3 having a high coverage and few defects can be formed.

In the above-described filter having an open cell structure, the pores 23 have few branches along the way and the inner radius is relatively stable. Therefore, it is considered that the raw material liquid 40 is likely to penetrate due to capillary action. Therefore, by using the filter having an open cell structure as the porous body 2, the raw material liquid 40 can be efficiently and reliably permeated into the pores 23.

In order to cover the first main surface 21 and the pores 23 with the raw material liquid 40, it is also required that the first main surface 21 of the porous body 2 has high smoothness. Therefore, when surface roughness of the first main surface 21 of the porous body 2 is measured by a measuring device, maximum height roughness is preferably 200 nm or less, and more preferably 100 nm or less. Within this range, a probability that the first main surface 21 can be covered with the raw material liquid 40 increases.

Since the first main surface 21 has the pores 23 open therein, an influence of the pores 23 is reflected in measurement results of the surface roughness. In consideration of this, a lower limit value of the maximum height roughness is preferably 2 nm or more, and more preferably 10 nm or more.

A laser microscope equipped with a white interferometer is used as the measuring device for surface roughness. Examples of such a laser microscope include VK-X3000 manufactured by Keyence Corporation. When measuring the maximum height roughness of the first main surface 21, first, a shape of the first main surface 21 is scanned at a magnification of 50 times. Accordingly, a concave-convex shape of the first main surface 21 is acquired. Next, a highest point and a lowest point are identified in a range excluding the pores 23 in the image. Next, a height difference between the two points is calculated and the height difference is set as the maximum height roughness. That is, a maximum height difference is obtained in the portion excluding the pores 23 from the measurement results of the concave-convex shape of the first main surface 21, and the maximum height difference is set as the maximum height roughness of the first main surface 21.

After the raw material liquid 40 is permeated into the pores 23, the supplied raw material liquid 40 is dried, if necessary. Accordingly, as shown in FIG. 4, a coating film 42 provided on the first main surface 21 is obtained. As shown in FIG. 4, a portion of the coating film 42 also penetrates the pores 23. The drying may be natural drying, forced drying, or drying using both. The natural drying is, for example, a method of leaving at room temperature for 1 hour or more. Examples of the forced drying include a method of heating at a temperature of 50°C or higher and 250°C or lower for 10 minutes or more, a method of placing a coating film under reduced pressure, and a method of spraying a gas.

### 2.2. Energy Applying Step

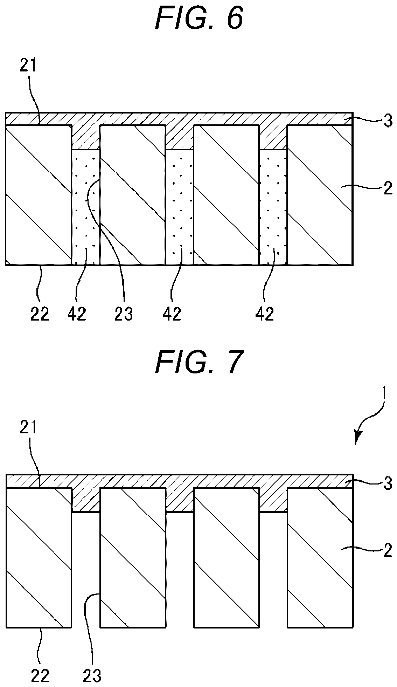

In the energy applying step S104, as shown in FIG. 5, a treatment of applying energy E from an upper side of the coating film 42 (a side opposite to the porous body 2) is performed. The treatment of applying energy E may be any treatment as long as it can cure or solidify the coating film 42 based on the applied energy E, and examples thereof include a treatment of emitting an energy ray such as an infrared ray, visible light, and an ultraviolet ray, a treatment of emitting plasma, and a treatment of emitting an electron beam. By this treatment, the coating film 42 can be cured and solidified to form the separation layer 3 shown in FIG. 6. In the following description, the expression "cure or solidify" is omitted and is referred to as "cure".

According to such a treatment, since a volume reduction is accompanied by the curing of the raw material liquid 40, the separation layer 3 is formed so as to embrace the porous body 2. Accordingly, the adhesion of the separation layer 3 can be further improved.

According to the above treatment, an upper surface of the raw material liquid 40 is likely to be smooth and is less susceptible to the influence of the raw material liquid 40 penetrating the pores 23. Therefore, a variation in the average thickness A is small, and an occurrence of pinholes and the like can be prevented even when the average thickness A is made small. As a result, the gas separation membrane 1 having a good gas permeability and good adhesion of the separation layer 3 can be efficiently manufactured.

In the above treatment, the entire coating film 42 may be cured, but in the present embodiment, as shown in FIG. 6, the coating film 42 can cured only partially through the thickness thereof. In the above-described treatment, since the energy E is applied from the upper side of the coating film 42, the curing of the coating film 42 proceeds downward from the upper surface of the coating film 42. Therefore, by stopping the application of energy E before the entire coating film 42 is cured, only an upper portion of the coating film 42 can be cured. Accordingly, the penetration depth B of the separation layer 3 to be formed can be easily controlled.

The treatment of applying energy E is optimized according to the configuration of the raw material liquid 40.

For example, when the raw material liquid 40 contains an uncured or semi-cured thermosetting resin, the above treatment is preferably a treatment of irradiating the coating film 42 with an energy ray, more preferably a treatment of irradiating the coating film 42 with infrared rays as the energy ray. Accordingly, since the coating film 42 can be heated without contact, the coating film 42 can be cured without causing damage to the coating film 42. As a result, the high-quality separation layer 3 having few defects can be formed.

Examples of an infrared ray irradiation device include an infrared ray flash lamp, a halogen lamp, and a light emitting diode. A wavelength of the energy ray applied in this case is not particularly limited, and is more than 780 nm and 1 mm or less.

When the raw material liquid 40 contains an uncured or semi-cured photocurable resin, the above treatment is preferably a treatment of irradiating the coating film 42 with an energy ray, and more preferably a treatment of irradiating the coating film 42 with visible light or an ultraviolet ray as the energy ray. Accordingly, the coating film 42 can be cured without contact. As a result, the high-quality separation layer 3 having few defects can be formed.

Examples of a visible light or ultraviolet ray irradiation device include a xenon lamp, an exciton lamp, a cold cathode-type ultraviolet ray lamp, a femtosecond laser, and a light emitting diode. A wavelength of the energy ray applied in this case is not particularly limited, and the wavelength of visible light is 380 nm or more and 780 nm or less, and the wavelength of the ultraviolet ray is 10 nm or more and less than 380 nm.

Further, when the raw material liquid 40 contains a monomer component, the above treatment is preferably a treatment of irradiating the coating film 42 with plasma or an electron beam. Accordingly, since the monomer component can be polymerized by the action of plasma or an electron beam, the coating film 42 can be cured without contact. As a result, the high-quality separation layer 3 having few defects can be formed. The monomer component may contain an oligomer or a prepolymer in addition to the monomer. The plasma may be vacuum plasma or atmospheric pressure plasma.

As the raw material liquid 40, silicone oil is preferably used. Since silicone oil is stable and easy to handle and has a small surface tension, the silicone oil has an excellent permeability into the porous body 2 and excellent defoaming properties. Therefore, the raw material liquid 40 containing silicone oil is particularly useful in forming the separation layer 3.

### 2.3. Unnecessary Portion Removing Step

In the unnecessary portion removing step S106, an uncured or unsolidified portion (an unnecessary portion) of the coating film 42 is removed. Accordingly, the separation layer 3 can be efficiently formed with the ratio B/A controlled to a predetermined value. As a result, as shown in FIG. 7, the gas separation membrane 1 according to the embodiment can be efficiently manufactured.

The unnecessary portion is removed by a washing treatment using a washing liquid, an ashing treatment, or the like. Among them, according to the washing treatment, the unnecessary portion can be easily removed.

As the washing liquid, a solvent capable of dissolving an unnecessary portion is preferably used. Specific examples thereof include normal hexane, acetone, methyl ethyl ketone, and methyl isobutyl ketone. In addition to these solvents, any additive may be added to the washing liquid.

A contact time between the unnecessary portion and the washing liquid is not particularly limited, and is preferably 5 minutes or more and 120 minutes or less, and more preferably 10 minutes or more and 60 minutes or less. Accordingly, the unnecessary portion can be removed and degradation of the formed separation layer 3 can be prevented.

If necessary, a vibration application treatment may be performed on the unnecessary portion, or an ultrasonic irradiation treatment or a stirring treatment may be performed on the washing liquid while the unnecessary portion is in contact with the washing liquid.

### 3. Advantages Exerted by Embodiment

The gas separation membrane 1 according to the embodiment is a gas separation membrane that selectively permeates and separates carbon dioxide from a mixed gas containing the carbon dioxide, and includes the porous body 2 and the separation layer 3. The porous body 2 has the first main surface 21 and the second main surface 22 which are in a front-and-rear relationship with each other, and the pores 23 connecting the first main surface 21 and the second main surface 22, and has a sheet shape. The separation layer 3 is provided on the first main surface 21 and is formed of a polymer material. In the gas separation membrane 1 according to the embodiment, a portion of the separation layer 3 penetrates the pores 23 from the first main surface 21. Further, in the gas separation membrane 1 according to the embodiment, the ratio B/A is 30% or more, where A is an average thickness of the separation layer 3 and B is a penetration depth of the separation layer 3 into the porous body 2.

According to such a configuration, the gas separation membrane 1 having an excellent carbon dioxide gas permeability and excellent adhesion of the separation layer 3 to the porous body 2 can be obtained.

In the gas separation membrane 1 according to the embodiment, the porous body 2 is a filter having an open cell structure.

According to such a configuration, when forming the separation layer 3, the pores 23 can be easily filled with the liquid raw material, and as a result, the separation layer 3 can be reliably formed in each pore 23. Accordingly, the gas separation membrane 1 having an excellent gas permeability can be implemented without impairing the high gas selectivity ratio of the separation layer 3.

In the gas separation membrane 1 according to the embodiment, an average thickness of the porous body 2 is 1 µm or more and 3000 µm or less, and an average pore diameter of the porous body 2 is 0.01 µm or more and 1000 µm or less.

According to such a configuration, the porous body 2 has a necessary and sufficient rigidity to support the separation layer 3. The separation layer 3 can be prevented from slipping out downstream of the porous body 2 while sufficiently ensuring the carbon dioxide gas permeability of the porous body 2.

In the gas separation membrane 1 according to the embodiment, an average thickness of the separation layer 3 is 10 nm or more and 1000 nm or less, and surface roughness of the separation layer 3 is 200 nm or less.

According to such a configuration, the separation layer 3 has a sufficient gas permeability. As a result, the gas separation membrane 1 that can reduce an input amount of energy required for separating carbon dioxide, specifically, that can reduce a pressure difference between pressures upstream and downstream of the gas separation membrane 1 can be implemented. When the separation layer 3 is formed using the liquid raw material, a probability that the first main surface 21 can be covered with the raw material liquid 40 increases. Accordingly, the gas separation membrane 1 having the separation layer 3 with a high coverage can be obtained.

In the gas separation membrane 1 according to the embodiment, the polymer material includes an organopolysiloxane.

According to such a configuration, the gas separation membrane 1 that exhibits a high gas selectivity ratio to carbon dioxide can be obtained.

The method for manufacturing the gas separation membrane according to the embodiment is a method for manufacturing the gas separation membrane 1 according to the embodiment, and includes the coating film forming step S102, the energy applying step S104, and the unnecessary portion removing step S106. In the coating film forming step S102, the raw material liquid 40 (a liquid raw material) is supplied to the first main surface 21 of the porous body 2 to form the coating film 42. In the energy applying step S104, a treatment of applying energy to the coating film 42 from a side opposite to the porous body 2 is performed, whereby the coating film 42 can be cured or solidified, and the separation layer 3 is formed. In the unnecessary portion removing step S106, an uncured or unsolidified portion (an unnecessary portion) of the coating film 42 is removed.

According to such a configuration, the gas separation membrane 1 having an excellent carbon dioxide gas permeability and excellent adhesion of the separation layer 3 to the porous body 2 can be manufactured efficiently.

In the method for manufacturing the gas separation membrane according to the embodiment, the raw material liquid 40 (a liquid raw material) contains an uncured or semi-cured thermosetting resin. The treatment of applying energy is a treatment of irradiating the coating film 42 with an infrared ray to heat the coating film 42 to cure the thermosetting resin.

According to such a configuration, since the coating film 42 can be heated without contact, the coating film 42 can be cured without causing damage to the coating film 42. As a result, the high-quality separation layer 3 having few defects can be formed.

In the method for manufacturing the gas separation membrane according to the embodiment, the raw material liquid 40 (the liquid raw material) contains an uncured or semi-cured photocurable resin. The treatment of applying energy is a treatment of irradiating the coating film 42 with visible light or an ultraviolet ray to cure the photocurable resin.

According to such a configuration, the coating film 42 can be cured without contact. As a result, the high-quality separation layer 3 having few defects can be formed.

In the method for manufacturing the gas separation membrane according to the embodiment, the raw material liquid 40 (the liquid raw material) contains a monomer component. The treatment of applying energy is a treatment of irradiating the coating film 42 with plasma or an electron beam to polymerize the monomer component.

According to such a configuration, the coating film 42 can be cured without contact. As a result, the high-quality separation layer 3 having few defects can be formed.

Although the gas separation membrane and the method for manufacturing the gas separation membrane according to the present disclosure have been described above based on a preferred embodiment, the present disclosure is not limited thereto.

For example, in the gas separation membrane according to the present disclosure, each part of the embodiment described above may be replaced with a component having a similar function, or any component may be added to the embodiments described above.

The method for manufacturing the gas separation membrane according to the present disclosure may be one in which any desired process is added to the above embodiment.

### Example

Next, specific examples of the present disclosure will be described.

### 4. Preparation of Gas Separation Membrane

### 4.1. Example 1

First, a porous body having a configuration shown in Table 1 was prepared. Details of the porous body will be described later.

Next, silicone oil was placed as a raw material liquid on an upper surface of the porous body and spread with a squeegee. Accordingly, it was confirmed that the silicone oil penetrated all pores of the porous body. KF-96L-10CS manufactured by Shin-Etsu Chemical Co., Ltd. was used as the silicone oil.

Next, the porous body permeated with the silicone oil was allowed to stand for 14 hours at room temperature in the atmosphere while an outer periphery of the porous body was held.

Next, the porous body was placed in a vacuum plasma device and subjected to a plasma treatment. Conditions of the plasma treatment are as follows.
- Plasma gas: argon
- Distance between electrodes: 10 cm
- Argon gas flow rate: 346 sccm
- RF power: 600 W

Next, the porous body after the plasma treatment was immersed in normal hexane and allowed to stand for 30 minutes. Thus, uncured silicone oil was removed.

In this manner, a gas separation membrane in Example 1 was obtained.

### 4.1. Examples 2 to 13 and Comparative Examples 1 to 4

A gas separation membrane was obtained in the same manner as in Example 1 except that a configuration of the gas separation membrane was changed as shown in Table 1 and Table 2.

### 5. Evaluation of Gas Separation Membrane

The gas separation membranes in each Example and each Comparative Example were evaluated as follows.

### 5.1. Carbon Dioxide Gas Permeability and Gas Selectivity Ratio

The gas separation membranes in each Example and each Comparative Example were cut into a circle having a diameter of 5 cm to prepare test samples. Next, using a gas permeability measuring device, a mixed gas obtained by mixing carbon dioxide: nitrogen at a volume ratio of 13:87 was supplied upstream of the test sample. A total upstream pressure was adjusted to 5 MPa, a partial pressure of carbon dioxide was adjusted to 0.65 MPa, a flow rate was adjusted to 500 mL/ min, and a temperature was adjusted to 40°C. A gas component that permeated through the test sample was analyzed by gas chromatography.

Next, the carbon dioxide gas permeability R_{CO2} and the nitrogen gas permeability R_{N2} of the gas separation membrane were obtained from analysis results, and the gas selectivity ratio R_{CO2}/R_{N2} of carbon dioxide to nitrogen was calculated.

Next, the measured carbon dioxide gas permeability R_{CO2} was compared with the following evaluation criteria to evaluate the carbon dioxide gas permeability in the gas separation membrane. The evaluation results are shown in Table 1 and Table 2.
A: The carbon dioxide gas permeability R_{CO2} is 200 GPU or more
B: The carbon dioxide gas permeability R_{CO2} is 100 GPU or more and less than 200 GPU
C: The carbon dioxide gas permeability R_{CO2} is 15 GPU or more and less than 100 GPU
D: The carbon dioxide gas permeability R_{CO2} is less than 15 GPU

The calculated carbon dioxide gas selectivity ratio R_{CO2}/R_{N2} was compared with the following evaluation criteria to evaluate the carbon dioxide gas selectivity ratio in the gas separation membrane. The evaluation results are shown in Table 1 and Table 2.
A: The gas selectivity ratio R_{CO2}/R_{N2} is 20 or more
B: The gas selectivity ratio R_{CO2}/R_{N2} is 10 or more and less than 20
C: The gas selectivity ratio R_{CO2}/R_{N2} is 5 or more and less than 10
D: The gas selectivity ratio R_{CO2}/R_{N2} is less than 5

### 5.2. Mechanical Characteristics

Regarding the gas separation membranes in each Example and each Comparative Example, an operation of bending the gas separation membrane into a bellows shape and then extending the bent gas separation membrane was performed. After repeating the operation 10 times, the gas separation membranes were cut into a circular piece having a diameter of 5 cm to prepare test pieces.

Next, the gas selectivity ratio R_{CO2}/R_{N2} of the test piece was calculated by the same method as in 5.1. Then, a difference between the gas selectivity ratio R_{CO2}/R_{N2} before the bending operation was performed and the gas selectivity ratio R_{CO2}/R_{N2} after the bending operation was performed was calculated as a decrease width of the gas selectivity ratio R_{CO2}/R_{N2}. The decrease width is an index quantitatively representing a degree of deterioration in gas selectivity ratio R_{CO2}/R_{N2} due to the bending operation. The mechanical characteristics of the gas separation membrane were relatively evaluated by comparing the calculated decrease width with the following evaluation criteria. The evaluation results are shown in Tables 1 and 2.
A: The decrease width of the gas selectivity ratio is small (less than 3)
B: The decrease width of the gas selectivity ratio is moderate (3 or more and less than 6)
C: The decrease width of the gas selectivity ratio is large (6 or more and 9 or less)
D: The decrease width of the gas selectivity ratio is particularly large (9 or more)

**Table 1**

| | | | | | Example 1 | Example 2 | Example 3 | Example 4 | Example 5 | Example 6 | Example 7 | Example 8 | Example 9 |
|---|---|---|---|---|---|---|---|---|---|---|---|---|---|
| | Separation layer | Material | Dimethylpolysiloxane | - | ○ | ○ | ○ | ○ | - | ○ | ○ | ○ | ○ |
| | | | Polyvinyl alcohol | - | - | - | - | - | ○ | - | - | - | - |
| | | Average thickness A | | nm | 30 | 100 | 200 | 300 | 250 | 100 | 150 | 100 | 100 |
| | | Penetration depth B | | nm | 25 | 60 | 100 | 100 | 100 | 60 | 80 | 50 | 90 |
| | | Ratio B/A | | % | 83 | 60 | 50 | 33 | 40 | 60 | 53 | 50 | 90 |
| | | Constituent material | Filter having open cell structure | - | ○ | ○ | ○ | ○ | ○ | - | - | - | - |
| | | | Japanese paper | - | - | - | - | - | - | ○ | - | - | - |
| | | | Shoji paper | - | - | - | - | - | - | - | ○ | - | - |
| Configuration of gas separation membrane | | | Filter paper | < | - | - | - | . | - | - | - | ○ | - |
| | | | Non-woven mask | - | - | - | - | - | - | - | - | - | ○ |
| | Porous body | | Vacuum cleaner filter (1) | < | - | - | - | - | - | - | - | - | - |
| | | | Vacuum cleaner filter (2) | - | - | - | - | - | - | - | - | - | - |
| | | Average thickness | | µm | 125 | 125 | 125 | 125 | 80 | 170 | 150 | 200 | 280 |
| | | Surface roughness (arithmetic average roughness Ra) | | nm | 50 | 50 | 50 | 50 | 25 | 250 | 200 | 80 | 150 |
| | Energy applying treatment | | | - | Vacuum plasma treatment | | | | | | | | |
| | Thickness ratio | | | % | 0.024 | 0.080 | 0.160 | 0.240 | 0.313 | 0.059 | 0.100 | 0.050 | 0.036 |
| Evaluation result | Carbon dioxide gas permeability | | | | A | A | B | B | B | A | A | A | A |
| | Carbon dioxide gas selectivity ratio | | | | B | A | A | A | A | B | B | B | A |
| | Mechanical characteristic | | | | C | A | A | B | B | B | B | B | B |

**Table 2**

| | | | | | Example 10 | Example 11 | Example 12 | Example 13 | Comparative Example 1 | Comparative Example 2 | Comparative Example 3 | Comparative Example 4 |
|---|---|---|---|---|---|---|---|---|---|---|---|---|
| | Separation layer | Material | Dimethylpolysiloxane | - | ○ | ○ | ○ | ○ | ○ | ○ | ○ | ○ |
| | | | Polyvinyl alcohol | - | - | - | - | - | - | - | - | - |
| | | Average thickness A | | nm | 200 | 200 | 150 | 100 | 150 | 150 | 150 | 150 |
| | | Penetration depth B | | nm | 150 | 80 | 80 | 60 | 0 | 30 | 0 | 30 |
| | | Ratio B/A | | % | 75 | 40 | 53 | 60 | 0 | 20 | 0 | 20 |
| | | Material | Filter having open cell structure | - | - | - | ○ | ○ | ○ | - | ○ | ○ |
| | | | Japanese paper | - | - | - | - | - | - | - | - | - |
| | | | Shoji paper | | - | - | | - | - | | - | - |
| | | | Filter paper | - | - | - | - | - | - | - | - | - |
| Configuration of gas separation membrane | | | Non-woven mask | - | - | - | - | - | - | ○ | - | - |
| | Porous body | | Vacuum cleaner filter (1) | - | ○ | - | - | - | - | - | - | - |
| | | | Vacuum cleaner filter (2) | - | - | ○ | - | - | - | - | - | - |
| | | Average thickness | | µm | 500 | 600 | 125 | 125 | 125 | 280 | 125 | 125 |
| | | Surface roughness (arithmetic average roughness Ra) | | nm | 160 | 180 | 50 | 50 | 50 | 150 | 50 | 50 |
| | Energy applying treatment | | | - | Vacuum plasma treatment | | Femtosedond laser | Xenon lamp | Vacuum plasma treatment | | Femtosecond laser | Xenon lamp |
| | Thickness ratio | | | % | 0.040 | 0.033 | 0.120 | 0.080 | 0.120 | 0.054 | 0.120 | 0.120 |
| Evaluation result | Carbon dioxide gas permeability | | | | B | B | A | A | A | A | A | A |
| | Carbon dioxide gas selectivity ratio | | | | B | B | A | A | A | A | A | A |
| | Mechanical characteristic | | | | B | B | A | A | D | D | D | D |

As is clear from Tables 1 and 2, the gas separation membrane in each Example was found to be excellent in carbon dioxide gas permeability and carbon dioxide gas selectivity ratio.

It was confirmed that the gas separation membrane in each Example was excellent in adhesion of the separation layer to the porous body as compared with the gas separation membrane in each Comparative Example.

## Claims

1. A gas separation membrane for selectively permeating and separating carbon dioxide from a mixed gas containing the carbon dioxide, the gas separation membrane comprising:
a sheet-shaped porous body having a first main surface and a second main surface which are in a front-and-rear relationship with each other, and pores connecting the first main surface and the second main surface; and
a separation layer provided on the first main surface and formed of a polymer material, wherein
a portion of the separation layer penetrates the pores from the first main surface, and
a ratio B/A is 30% or more, where A is an average thickness of the separation layer, and B is a penetration depth of the separation layer into the porous body.

2. The gas separation membrane according to claim 1, wherein
the porous body is a filter having an open cell structure.

3. The gas separation membrane according to claim 1, wherein
an average thickness of the porous body is 1 µm or more and 3000 µm or less, and
an average pore diameter of the porous body is 0.01 µm or more and 1000 µm or less.

4. The gas separation membrane according to claim 1, wherein
the average thickness A of the separation layer is 10 nm or more and 1000 nm or less, and
surface roughness of the porous body is 200 nm or less.

5. The gas separation membrane according to claim 1, wherein
the polymer material contains an organopolysiloxane.

6. A method for manufacturing a gas separation membrane, which is a method for manufacturing the gas separation membrane according to claim 1, the method comprising:
supplying a liquid raw material to the first main surface of the porous body to form a coating film;
performing a treatment of applying energy to the coating film from a side opposite to the porous body to cure or solidify the coating film to form the separation layer; and
removing a portion of the coating film that is not cured or solidified.

7. The method for manufacturing the gas separation membrane according to claim 6, wherein
the liquid raw material contains an uncured or semi-cured thermosetting resin, and
the treatment of applying energy is a treatment of irradiating the coating film with an infrared ray to heat the coating film to cure the thermosetting resin.

8. The method for manufacturing the gas separation membrane according to claim 6, wherein
the liquid raw material contains an uncured or semi-cured photocurable resin, and
the treatment of applying energy is a treatment of irradiating the coating film with visible light or an ultraviolet ray to cure the photocurable resin.

9. The method for manufacturing the gas separation membrane according to claim 6, wherein
the liquid raw material contains a monomer component, and
the treatment of applying energy is a treatment of irradiating the coating film with plasma or an electron beam to polymerize the monomer component.
